# EUROPÄISCHE PATENTANMELDUNG

(11) **EP 0 890 769 A2**
(43) Veröffentlichungstag der Anmeldung: **13.01.1999**
(21) Anmeldenummer: 98111576.9
(22) Anmeldetag: 24.06.1998
(51) Int. Cl.: F16L 11/08, F16L 11/22, F16L 11/24

(54) **Leitungsrohr zum Transport petrochemischer Medien**

(30) Priorität: 07.07.1997 DE 29711868 U
(71) Anmelder: BRUGG Rohrsysteme GmbH, D-31515 Wunstorf (DE)
(72) Erfinder: Bittner, Herbert, 31515 Wunstorf (DE); Homann, Jörn, 30655 Hannover (DE); Knuth, Dietrich, 30625 Hannover (DE); Friessner, Jürgen, 30900 Wedemark (DE); Führmann, Siegfried, 31515 Wunstorf (DE)

(57) **Zusammenfassung**

Es wird ein Leitungsrohr zum Transport von petrochemischen Medien, wie beispielsweise Kraftstoffe für Verbrennungsmotoren beschrieben, bestehend aus einem Innenrohr (1) aus Metall oder Kunststoff welches innerhalb eines Außenrohres (4,5) aus Kunststoff angeordnet ist. Das Innenrohr (1) ist mittels eines Abstandshalters (2) konzentrisch zum Außenrohr (4,5) angeordnet, welches eine Schicht (4) aus einem gegen Flüssigkeit oder Gase diffusionsdichtem Material aufweist.

## Beschreibung

Die Erfindung betrifft ein Leitungsrohr zum Transport von petrochemischen Medien nach dem Oberbegriff des Anspruchs 1.

Aus der DE-PS 2 164 814 ist ein Leitungsrohr für den Transport umweltgefährdender Medien, wie z. B. Erdöl bzw. Heizöl, bekannt, welches aus zwei konzentrisch zueinander angeordneten Leitungsrohren besteht, wobei der Zwischenraum zwischen dem Innenrohr und dem Außenrohr mit einem vom Normaldruck abweichenden Druck beaufschlagt ist. Der Zwischenraum ist mit einem Leckanzeigegerät verbunden, welches Schäden sowohl am Innenrohr als auch am Außenrohr meldet. Sowohl das Innenrohr als auch das Außenrohr ist als schraubenlinienförmig gewelltes Metallrohr ausgebildet. Auf das Innenrohr ist wendelförmig ein Metallband aufgewickelt, welches sich durch plastische Verformung mit dem Innenrohr formschlüssig verbindet. Das Außenrohr ist über seine Wellentäler mit dem Metallblech ebenfalls formschlüssig verbunden. Dies wird durch die Einstellung der Welltiefe beim Wellvorgang des Außenrohres erreicht.

Dieses bekannte Leitungsrohr ist imstande, Mediendrücke von bis zu 25 bar aufzunehmen. Für viele Anwendungsbereiche ist dieses Leitungsrohr überqualifiziert. Insbesondere, wenn keine hohen Anforderungen von den Mediendrücken vorliegen, ist dieses Leitungsrohr zu kostspielig.

Der Erfindung liegt ausgehend vom bekannten Leitungsrohr die Aufgabe zugrunde, ein Leitungsrohr anzugeben, welches wesentlich kostengünstiger herstellbar ist und welches besser biegbar ist.

Diese Aufgabe wird durch die im Kennzeichen erfaßten Merkmale gelöst.

In einer bevorzugten Ausführungsform besteht das erfindungsgemäße Leitungsrohr aus einem schraubenlinienförmig gewellten Innenrohr aus Edelstahl, einer Vielzahl mit großem Schlag auf das Innenrohr aufgebrachter Kunststoffstränge, die parallel zueinander das Innenrohr umlaufen, einer auf den Kunststoffsträngen liegenden Bewicklung aus einem oder zwei Kunststoffbändern bzw. Folien, einer in Längsrichtung aufgebrachten an ihren Längsrändern miteinander verschweißten Folie aus diffusionsdichtem Material, vorzugsweise aus Ethylenvinylalkohol sowie einem extrudierten Kunststoffmantel. Ein derartig aufgebautes Leitungsrohr ist in hervorragender Weise für den Transport von Kraftstoffen sowohl im Druck- als auch im Saugleitungsbetrieb geeignet. Die Flexibilität des Leitungsrohres wird dadurch verbessert, daß der Außenmantel eine wellenartige Profilierung aufweist.

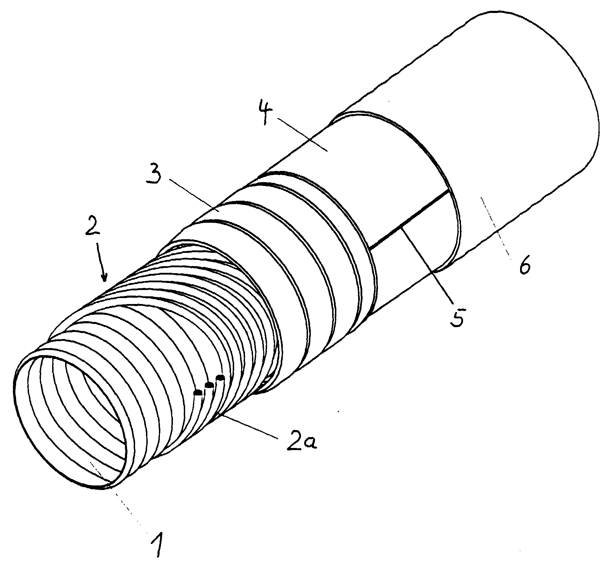

Die Erfindung ist anhand des in der Figur schematisch dargestellten Ausführungsbeispiels näher erläutert.

Mit 1 ist das Innenrohr bezeichnet, welches vorzugsweise als gewelltes Metallrohr, vorzugsweise aus Edelstahl ausgebildet ist. Alternativ kann das Innenrohr 1 auch ein Kunststoffrohr mit einer Diffusionssperrschicht sein.

Auf dem Innenrohr 1 liegt ein Abstandshalter 2, der aus einer Vielzahl von mit großem Schlag aufgebrachten Kunststoffsträngen 2a ausgebildet ist, die parallel zueinander das Innenrohr 1 schraubenlinienförmig umlaufen.

Als Abstandshalter 2 kann auch ein Gitternetzgewebe aus Kunststoff verwendet werden, welches entweder längseinlaufend oder wendelförmig auf das Rohr 1 aufgelegt wird.

Weiterhin kann ein mit Profilierungen bzw. Erhebungen versehenes Kunststoff- oder Metallband schraubenlinienförmig oder längseinlaufend auf dem Innenrohr 1 aufliegen.

Über dem Abstandshalter 2 liegt eine Bewicklung 3 aus einem Kunststoffmaterial, welche die Aufgabe hat, die Kunststoffstränge 2a in ihrer Lage auf dem Innenrohr 1 festzulegen. Diese Bewicklung 3 ist insbesondere dann erforderlich, wenn die Kunststoffstränge 2a mit wechselnder Schlagrichtung (SZ-Umseilung) aufgelegt sind. Darüber hinaus verhindert die Bewicklung 3, daß die Kunststoffstränge 2a mit der nächsten Lage, einer Folie 4, verklebt.

Die auf der Bewicklung 3 liegende eine Folie 4 besteht aus diffüsionsdichtem Material, z. B. aus einem copolymerbeschichtetem Aluminiumband, einer metallisierten Kunststoffolie oder einem diffusionsdichten Kunststoff wie beispielweise Ethylenvinylalkohol. Die Folie 4 ist längseinlaufend aufgebracht und an ihren Längsrändern 5 verklebt oder verschweißt.

Als äußerer Schutz dient ein extrudierter Kunststoffmantel 6, der vorzugsweise mit der Folie 4 verklebt oder verschweißt. Der Kunststoffmantel 6 ist zweckmäßigerweise mit einer ringförmigen Wellung versehen, um die Flexibilität des Leitungsrohres zu verbessern.

Der zwischen dem Innenrohr 1 und der verschweißten Folie 4 gebildete Zwischenraum kann als Überwachungsraum auf Dichtigkeit verwendet werden. Er wird zu diesem Zweck z. B. an ein auf Druckschwankungen reagierendes nicht dargestelltes Leckwarngerät angeschlossen.

Das dargestellte Leitungsrohr kann in kontinuzierlicher Arbeitsweise d. h. in großen Längen hergestellt werden.

Zunächst wird das Innenrohr 1 aus einem längseinlaufenden allmählich zum Rohr geformten Metallband hergestellt. Das zum Rohr geformte Metallband wird im selben Arbeitsgang längsnahtverschweißt und anschließend gewellt.

Im selben oder einem nächsten Arbeitsgang wird der Abstandshalter 2 und falls erforderlich die Bewicklung 3 aufgebracht. Um dieses Gebilde wird die längseinlaufende Folie 4 zum Rohr geformt und deren Längsränder 5 verschweißt oder verklebt. Abschließend wird der Kunststoffmantel 6 aufextrudiert und gewellt.

Abmessungen für ein typisches Leitungsrohr nach der Erfindung sind:

| | | |
|---|---|---|
| Innenrohr: | Innendurchmesser | 60 mm |
| | Außendurchmesser | 66 mm |
| Abstandshalter: | Anzahl der Stränge | 18 |
| | Durchmesser der Stränge | 4 mm |
| | Schlaglänge der Stränge | 126 mm |
| Kunststoffmantel: | Außendurchmesser | 80 mm |

Ein Leitungsrohr mit diesen Abmessungen ist äußerst flexibel und kann über einen Biegeradius von 440 mm gebogen werden. Die üblicherweise auf einer Kabeltrommel unterzubringende Länge beträgt 500 m, d. h. das Leitungsrohr kann in einem Stück ohne aufwendige Verbindungsstellen verlegt werden.

Ein besonders vorteilhafter Anwendungsfall für die erfindungsgemäße Leitung liegt auf Tankstellenanlagen. Hier findet das Leitungsrohr Verwendung als Verbindung zwischen einem Vorratstank und einer Zapfsäule, zwischen dem Fernfüllschacht und dem Domschacht des Erdtanks und als Gaspendel-, Gasrückführungs- und Entlüftungsleitung.

## Patentansprüche

1. Leitungsrohr zum Transport von petrochemischen Medien, wie beispielsweise Kraftstoffe für Verbrennungsmotoren, bestehend aus einem Innenrohr (1) aus Metall oder Kunststoff welches innerhalb eines Außenrohres (4,5) aus Kunststoff angeordnet ist, gekennzeichnet durch folgende Merkmale
a) das Innenrohr (1) ist mittels eines Abstandshalters (2) konzentrisch zum Außenrohr (4,5) angeordnet,
b) das Außenrohr (4,5) weist eine Schicht (4) aus einem gegen Flüssigkeit oder Gase diffusionsdichtem Material auf.

2. Leitungsrohr nach Anspruch 1, dadurch gekennzeichnet, daß das Innenrohr (1) ein gewelltes Metallrohr ist.

3. Leitungsrohr nach Anspruch 1 oder 2, dadurch gekennzeichnet, daß der durch den Abstandshalter zwischen dem Innen- (1) und dem Außenrohr (4,5) gebildete Ringraum einen materialfreien Querschnitt von mindestens 10% aufweist.

4. Leitungsrohr nach einem der Ansprüche 1 bis 3, dadurch gekennzeichnet, daß das Außenrohr (5) gewellt oder wellenförmig profiliert ist.

5. Leitungsrohr nach einem der Ansprüche 1 bis 4, dadurch gekennzeichnet, daß die Schicht aus einem diffusionsdichten Material durch eine Folie (4) aus einem Metall oder einem diffusionsdichten Kunststoff gebildet ist, die mit der Innenoberfläche des Außenrohres (5) klebend verbunden oder verschweißt ist.

6. Leitungsrohr nach Anspruch 5, dadurch gekennzeichnet, daß die Schicht aus einer copolymerbeschichtete Aluminiumfolie (4) besteht.

7. Leitungsrohr nach Anspruch 5, dadurch gekennzeichnet, daß die Folie (4) aus Ethylenvinylalkohol (EVOH), Polyamid oder einem Ethylenvinylalkohol-Polyamid-Compound besteht.

8. Leitungsrohr nach einem der Ansprüche 1 bis 7, dadurch gekennzeichnet, daß der Ringraum zwischen Innen- (1) und Außenrohr (4,5) an ein Drucküberwachungsgerät anschließbar ist.

9. Leitungsrohr nach einem der Ansprüche 1 bis 8, dadurch gekennzeichnet, daß der Abstandshalter (2) aus zumindest einem wendelartig auf das Innenrohr (1) gebrachten Strang (2a) besteht.

10. Leitungsrohr nach Anspruch 8, dadurch gekennzeichnet, daß der Strang (2a) aus Kunststoffbesteht.

11. Leitungsrohr nach Anspruch 9 oder 10, dadurch gekennzeichnet, daß mehrere Stränge (2a) wendelartig mit gleicher Schlaglänge und gleichem Abstand zueinander auf das Innenrohr (1) aufgebracht sind.

12. Leitungsrohr nach einem der Ansprüche 1 bis 10, dadurch gekennzeichnet, daß der Abstandshalter (2) ein Netz aus miteinander verschweißten Kunststofffäden ist, welches auf das Innenrohr (1) aufgelegt ist.

13. Leitungsrohr nach einem der Ansprüche 1 bis 12, dadurch gekennzeichnet, daß zwischen dem Abstandshalter (2) und der Schicht (4) aus einem gegen Flüssigkeit oder Gase diffusionsdichtem Material eine Bewicklung (3) aus Kunststoff vorgesehen ist.

14. Leitungsrohr nach einem der Ansprüche 1 bis 13, dadurch gekennzeichnet, daß der Abstandshalter (2) ein Metall- oder Kunststoffband mit nach innen und/oder nach außen gerichteten Erhebungen ist, welches mit längsaxial verlaufenden Längskanten um das Innenrohr (1) geformt ist.
